# EUROPEAN PATENT SPECIFICATION

(11) **EP 0 774 621 B1**
(45) Date of publication and mention of the grant of the patent: **03.05.2000**
(21) Application number: 96308234.2
(22) Date of filing: 14.11.1996
(51) Int. Cl.: F23D 14/22, F23D 14/32

(54) **Method and apparatus for achieving combustion with a low production of nitrogen oxides**
Verbrennungsverfahren und Vorrichtung mit niedriger Stickstoffoxid-Erzeugung
Procédé et appareil de combustion à faibles émissions d'oxyde d'azote

(30) Priority: 16.11.1995 JP 29824195
(43) Date of publication of application: 21.05.1997
(73) Proprietor: TOKYO GAS CO., LTD., Minato-ku, Tokyo 105-0022 (JP)
(72) Inventor: Motegi, Toru, Urban Heights Nakameguro, Tokyo (JP)
(74) Representative: Bryer, Kenneth Robert

(56) References cited:
- EP-A- 0 014 221
- EP-A- 0 635 676
- DE-A- 2 548 790
- FR-A- 2 619 891
- PATENT ABSTRACTS OF JAPAN vol. 096, no. 004, 30 April 1996 & JP 07 318021 A (TOKYO GAS CO LTD), 8 December 1995,

## Description

The present invention relates to a method and apparatus for achieving combustion, especially combustion of fuel gas, with a low production of nitrogen oxides. Hereinafter, for brevity, nitrogen oxides will be termed NOx.

The regulations against the emission of NOx upon combustion are intensified year after year, and very active technical challenges to decrease NOx are conducted. The NOx produced by combustion includes fuel NOx, prompt NOx and thermal NOx. Among these types of NOx thermal NOx is produced as the nitrogen molecules in combustion air are oxidised in a high temperature atmosphere, and is highly dependent on temperature. At higher combustion temperatures, NOx production increases sharply. Thermal NOx is always produced if the combustion gas contains nitrogen molecules and, especially when a hydrocarbon-based fuel is burned, the NOx emitted is said to be mostly thermal NOx. A number of methods for decreasing NOx have been proposed, including multi-stage combustion methods, exhaust gas recirculation methods, lean combustion methods, as well as various combinations of these.

In multi-stage combustion methods, the fuel, or the combustion air, is divided for combustion in two or more stages, and low NOx combustion is sought by keeping the flame temperature low or by keeping the oxygen concentration low. These combustion methods have the problem that multi-stage combustion require a complicated burner.

Exhaust gas recirculation methods aim to lower the flame temperature or to lower the oxygen concentration by mixing part of the combustion product or exhaust gas with the combustion air or the fuel, and these methods include forced exhaust gas recirculation methods and self-induced exhaust gas recirculation methods. Forced exhaust gas recirculation methods use a recirculation duct and a blower to mix part of the exhaust gas forcibly with combustion air or fuel, and these are the most general methods. In the self-induced exhaust gas recirculation methods, a specially devised burner is used to let combustion air flow or fuel flow entrain the exhaust gas for mixing to achieve the effect of exhaust gas recirculation by jet entrainment. Self-induced exhaust gas recirculation methods have an advantage that the effect of exhaust gas recirculation can be obtained without forcibly recirculating the combustion product gas, and is free from the complications of the multi-stage combustion methods which involve the diversion of the fuel or combustion air into a plurality of lines. A burner utilising a self-induced exhaust gas recirculation method is disclosed, for example, in Japanese Patent Laid-Open No. 87-17506. Many other burners use self-induced exhaust gas recirculation methods. However, these methods are limited in their ability to decrease NOx and further technical development is necessary to meet the latest more severe NOx regulations.

Combustion methods developed to maximise the advantage of self-induced exhaust gas recirculation are proposed in Japanese Patent Laid-Open No. 89-300103 and 91-91601, and Japanese Utility Model Laid-Open No. 77-61545. These combustion methods are characterised in that combustion air flow and fuel flow are separately and independently injected into a furnace with a burner without any flame stabilising mechanism, to maximise the effect of self-induced exhaust gas recirculation. In this configuration, the flame does not stabilise on the burner, but is formed at a raised position, and combustion begins after part of the combustion product gas in the furnace has been sufficiently entrained or captured by the fuel flow or combustion air flow. In these combustion methods, the flame is a gentle diffusion flame, but since there is no flame stabilising mechanism, it can happen that unless the temperature is high, stable ignition cannot be achieved. Therefore, even though the methods are suitable for high temperature furnaces such as heating furnaces and melting furnaces, they have problems in that when they are applied to boilers and low temperature heating furnaces the amount of unburned combustibles increases and a larger furnace must be used for perfect combustion.

Another method for decreasing thermal NOx is to use a premixed flame. Premixed combustion at a high excess air ratio can significantly decrease NOx, but at a high excess air ratio the combustion efficiency and heat transfer greatly decline. Furthermore, the premixed flame is poor in stability. A method of decreasing thermal NOx by combining premixed combustion with the effect of self-induced exhaust gas recirculation is proposed in Japanese Patent Laid-Open No. 91-175211. In this combustion method, the flame stabiliser is specially devised, and a part of the lower temperature combustion gas is mixed with the premixture before the premixture initiates combustion, to lower the flame temperature, or to lower the oxygen concentration, for decreasing NOx. However, this combustion method and apparatus also have the problems which have been observed with other premixed type burners. In particular, an air-fuel mixer is necessary to form a premixture for premixed combustion and, since a premixture within inflammable limits is used, the flame may burn back into the burner or mixer. Furthermore, there is a problem that since part of the combustion product gas is mixed with an inflammable premixture, ignition occurs immediately after the mixing between the premixture and the combustion product gas if the latter is at a high temperature; this prevents the full effect of self-induced exhaust gas recirculation from being used, and requires that the flame stabiliser must be specially devised to ensure that the premixture is not ignited when the premixture and combustion product gas are mixed.

DE-A-2548790 discloses a burner head having a central gas pipe surrounded by an air conducting pipe and a baffle disc in front of the outlet from the gas pipe, in which a baffle ring is fixed to the end of the gas pipe and displacement bodies of a particular size are arranged in the space between the baffle disc and ring.

FR-A-2619891 discloses a gas burner head having a disc with a central opening in which is mounted the open extremity of a combustion gas pipe. First openings are arranged around the central opening and communicate with an annular pipe for the combustion air. Second openings are radially arranged in the end of the gas pipe in the disc so as to communicate with the first openings.

As described above, self-induced exhaust gas recirculation methods have advantages that the burner can be simple and that low NOx combustion is possible, compared with other low NOx combustion methods such as multi-stage combustion methods and lean premixed combustion methods. In the combustion methods for decreasing thermal NOx by using self-induced exhaust gas recirculation, if the self-induced exhaust gas recirculation is used to the maximum extent for the diffusion flame, the temperature range usable in the furnace is limited, and the usable combustion equipment is also limited. Moreover, the application of self-induced exhaust gas recirculation to the premixed flame has flame stability problems, such as back combustion peculiar to premixed combustion and requires a more specifically devised flame stabiliser.

In a first aspect the present invention provides combustion apparatus for achieving combustion with a low production of nitrogen oxides, which apparatus comprises an air delivery pipe and a fuel pipe located within the air delivery pipe, the air delivery pipe being closed at the end by a baffle plate having a plurality of air delivery openings around the fuel pipe at or adjacent the tip of the fuel pipe, a plurality of fuel injectors extending from the fuel pipe and having fuel outlets in the vicinity of the air delivery openings in the baffle plate, which fuel outlets are circumferentially offset from, and adjacent a radially inner corner of, the air delivery openings and positioned so that in use fuel injected from the outlets of the fuel injectors may be injected in a direction generally perpendicular to the general direction of air flow just before the air flow is delivered through the air delivery openings in the baffle plate.

According to a second aspect of the present invention there is provided a method of achieving combustion with a low production of nitrogen oxides, which method uses a burner having combustion apparatus according to the first aspect of the invention and in which method fuel injected from the outlets of the fuel injectors is injected in a direction generally perpendicular to the direction of the air flow just before the air flow is delivered through the air delivery openings in the baffle plate, and the ratio of the air flow velocity at the air delivery openings to the fuel flow velocity at the fuel outlets is 0.2 or more.

In order to make use of exhaust gas recirculation the burner may have a disc, larger in diameter than the fuel pipe, located substantially parallel to but spaced from the baffle plate on the side thereof opposite the tip of the fuel pipe, to form a gas recirculation promotion area downstream thereof.

In performing the method of the invention oxygen enriched air comprising 21% or more by volume of oxygen may be delivered along the said delivery pipe.

The fuel injectors may extend generally radially outwardly from the fuel pipe.

In one embodiment there are the same number of fuel injectors as there are air delivery openings in the baffle plate and they are all offset from their respective air delivery openings in the same circumferential direction.

In another embodiment there are twice as many fuel injectors as there are air delivery openings in the baffle plate, the fuel injectors being arranged in pairs with the fuel injectors of each pair being located adjacent respective opposite radially inner corners of their associated air delivery opening. In other words the fuel injectors of each pair are offset circumferentially to opposite sides of the same delivery opening.

In either of the above embodiments there may be further provided a disc, larger in diameter than the fuel pipe and located on the side of the baffle plate opposite the fuel pipe, the disc being substantially parallel to but spaced from the baffle plate, to form a gas recirculation promotion area downstream thereof.

The disc may be carried on and close a part of the end of the fuel pipe which projects through the baffle plate.

Various embodiments of the invention will now be more particularly described by way of non-limitative example, with reference to the accompanying drawings, in which:
Figure 1 is an illustration showing a first embodiment of the present invention in end view and partial axial section;
Figure 2 is an illustration showing a second embodiment of the present invention, again in end view and partial axial section;
Figure 3 is an illustration showing a third embodiment of the present invention, in end view and partial axial section;
Figure 4 is an illustration showing a fourth embodiment of the present invention, in end view and partial axial section;
Figure 5 is a diagrammatic illustration showing operation of the embodiment of Figure 1, where the combustion product gas, air and fuel gas are mixed;
Figure 6 is a diagrammatic illustration like Figure 5, for the embodiment of Figure 2;
Figure 7 is a diagrammatic axial section of the embodiment of Figure 1, showing the mixing patterns of the combustion product gas, air and fuel gas;
Figure 8 is a diagrammatic axial section of the embodiment of Figure 2 showing the mixing patterns of the combustion product gas, air and fuel gas;
Figure 9 is a diagrammatic axial section of the embodiments of Figures 3 (left hand side) and Figure 4 (right hand side) showing the mixing pattern of the combustion product gas, air and fuel gas;
Figure 10 is a diagram showing the NOx reducing effect of the present invention; and
Figure 11 is a diagram showing the NOx reducing effect of the present invention in comparison with a conventional example.

The drawings illustrate various embodiments of burner in which air is injected into a furnace through openings in a baffle plate and, just before air is injected from the openings, fuel is injected in a direction perpendicular to the air flow, into a region immediately upstream of the radially inner corners of the air injecting openings respectively on one side or both sides, in the circumferential direction, so that diffusion flames may be formed with the fuel wrapped by air, and burned without being stabilised at the air injecting portions or fuel injecting portions, to ensure that some of the combustion product (exhaust) gas may be entrained by the air flow and the fuel flow before the diffusion flames are formed, to effectively achieve self-induced exhaust gas recirculation, for decreasing NOx.

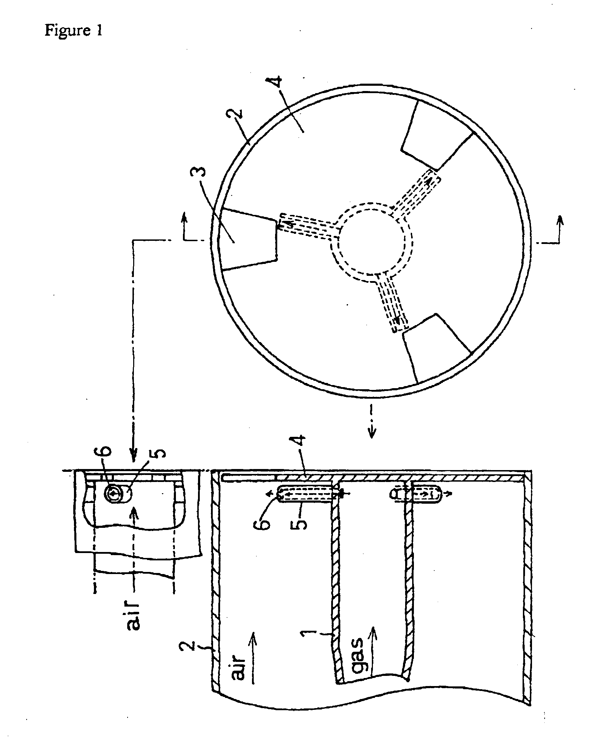

In Figure 1, symbol 1 denotes a fuel pipe closed at its end by a baffle plate 4 with a plurality of openings 3 spaced around its periphery. The baffle plate 4 lies in contact with the inside surface of an air pipe 2. Adjacent the radially inner ends of the plurality of openings 3, are the outlets 6 of fuel injection pipes 5 connecting to the fuel pipe 1. In this embodiment there are three baffle plate openings 3 and three fuel injector pipes 5, although there may be a different number of openings 3 in which case there would be a corresponding number of fuel injector pipes 5. The outlets of the fuel injector pipes 5 are located adjacent the radially inner corners of the openings 3, just downstream from these and offset in the same circumferential direction as one another.

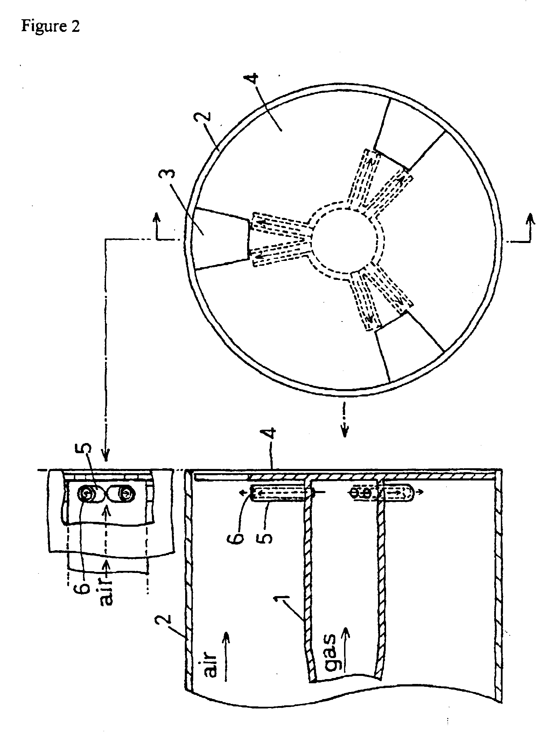

In the alternative embodiment shown in Figure 2 there are twice as many fuel injector pipes 5 as there are baffle plate openings 3, and these injector pipes are arranged with their outlets 6 adjacent respective radially inner corners of the openings 3. In effect the injector pipes 5 are arranged in pairs with each pair being associated with a respective opening 3, and the pipes 5 of each pair are oriented with their respective outlets 6 adjacent a respective radially inner corner of the associated opening 3.

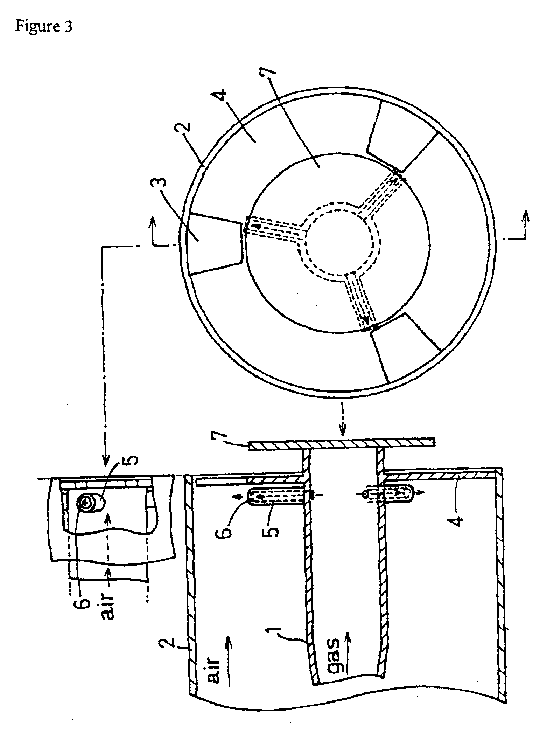

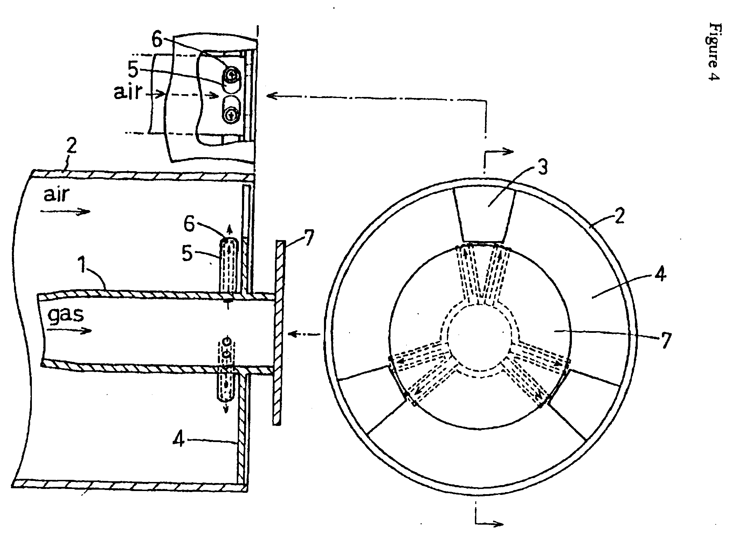

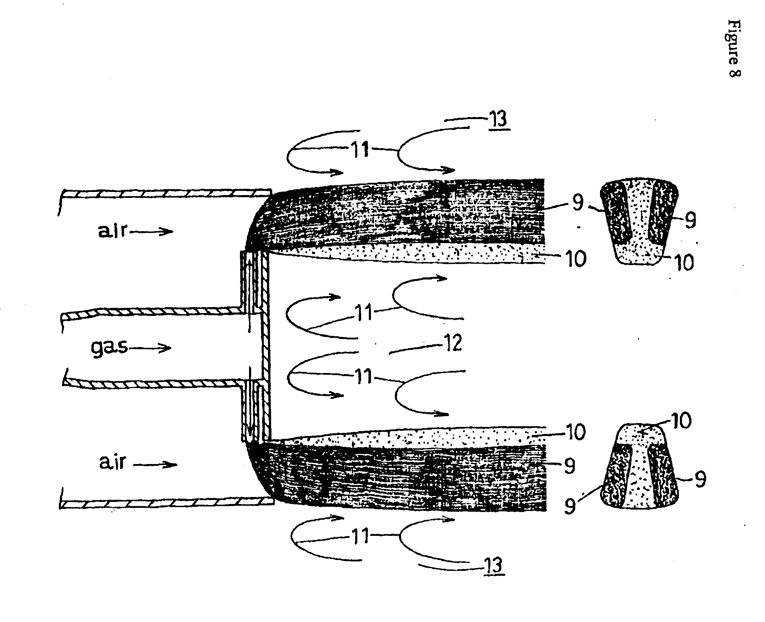

In the case of Figures 3 and 4, the fuel pipe 1 extends through the baffle plate 4, and a disc 7 larger in diameter than the fuel pipe 1 is installed at the tip of the fuel pipe 1, in order that a self-induced exhaust gas recirculation promoting area 8 may be formed downstream of the disc 7 as shown in Figure 9.

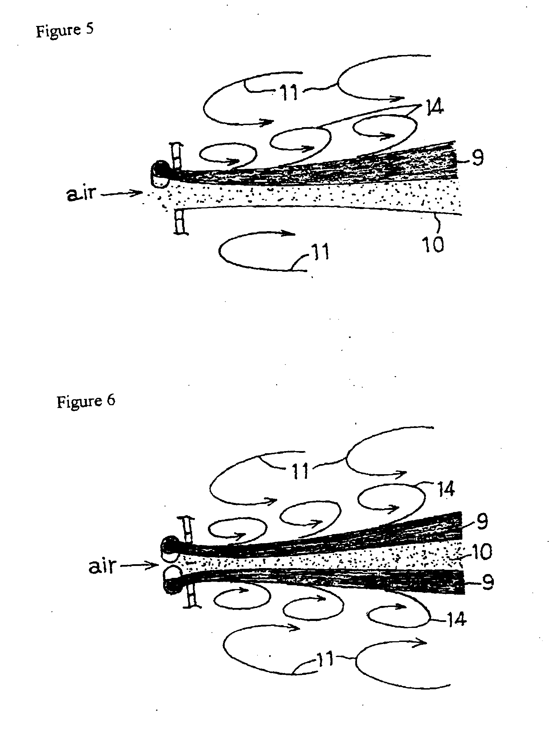

In this embodiment air is injected into the furnace through the openings 3, and just before the air is injected from the openings 3, the fuel gas is injected from the fuel injecting outlets 6 in the direction perpendicular to the air flow, into the spaces immediately upstream of the radially inner corners of the air openings 3 respectively on one side (Figure 3) or both sides (Figure 4) in the circumferential direction. In this case, the ratio of the air flow velocity at the openings 3 to the fuel gas flow velocity at the fuel outlets 6 must be set at 0.2 or more, preferably between 0.2 and about 5. If the ratio is less than 0.2, the fuel gas can pass right through the air flow, to collide with the inside wall of the air pipe 2, and flames stabilised in the air pipe 2 are formed. For this reason, the ratio cannot be set at less than 0.2. If the ratio is set as specified above, diffusion flames, which are not stabilised at the openings 3 are formed, and the fuel gas flow 9 (see Figures 5 and 6) injected in the direction perpendicular to the air flow on one side or both sides of each of the openings 3 is formed on one side or both sides of air flow 10, with powerful eddy currents 14 alongside the fuel gas flow 9, as shown in Figures 5 and 6.

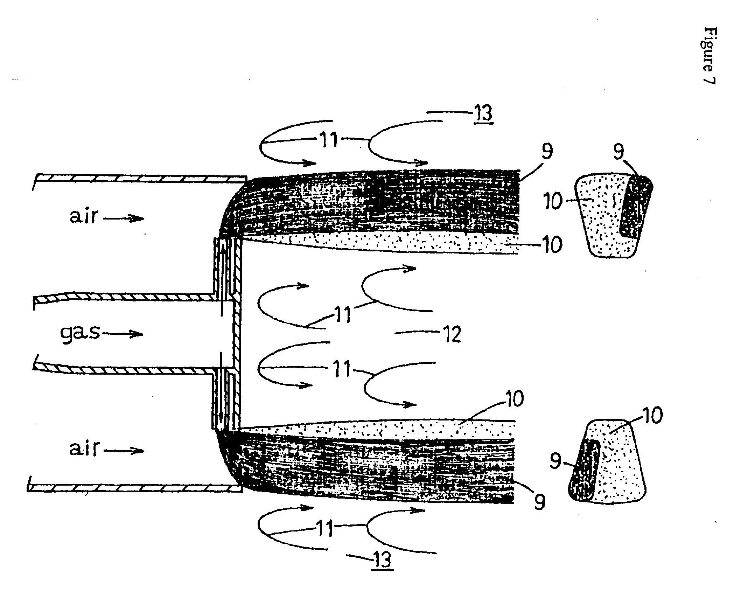

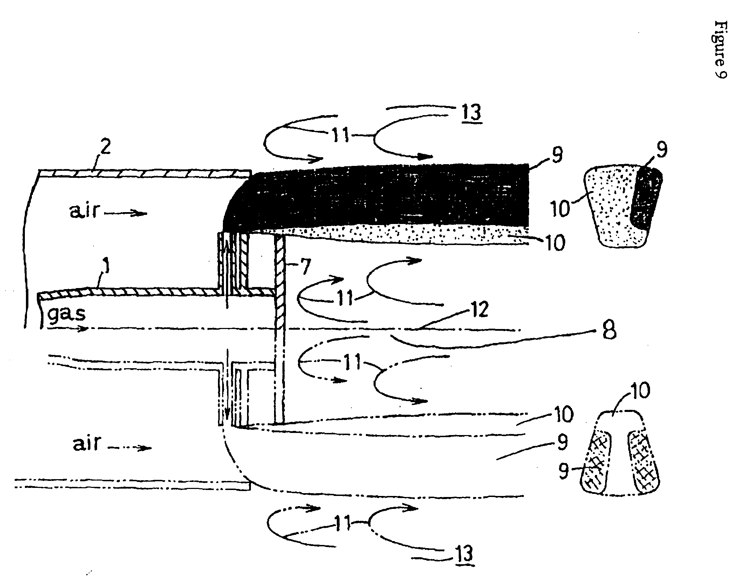

As shown in Figures 7 and 8, the fuel gas flow 9 is not completely surrounded by the air flow, but rather is located at the periphery of the air flow 10, and combustion product (furnace) gas 11 is entrained by the air flow 10 and by the fuel gas flow shown by the arrows. For the air flow 10, the high temperature furnace gas flow 11 is diffused and mixed from the outside, while simultaneously, the gas flow 9 is diffused and mixed internally with the air stream. In the case of ordinary diffusion flames, since flames are formed and stabilised at air injection holes or fuel gas injection holes, combustion begins before the air flow entrains the surrounding furnace gas. However, in the present invention, since the flow velocity ratio is set as specified above, the flames are not stabilised at the openings 3 or at the fuel injector outlets 6 but rather the air flow 10 is mixed with the furnace gas 11 while being heated, and at the same time, it is gradually mixed with the fuel gas flow 9 streaming along the air flow 10. The three components develop a favourable mixture state and when the temperature, fuel concentration and oxygen concentration satisfy the ignition condition, combustion is initiated to form the diffusion flames. In these diffusion flames, since part of the combustion product gas is sufficiently mixed with the combustion air, or the fuel flow before combustion is initiated, the maximum effect of self-induced exhaust gas recirculation can be obtained and the lower flame temperature and the lower oxygen concentration assure remarkably low NOx production. In this case, an internal recirculation area 12 and an external recirculation area 13 contribute greatly to the entrainment of a large quantity of the furnace gas 11.

The fuel injected in the direction perpendicular to the air flow 10 into the spaces immediately upstream of the radially inner corners of the injecting openings 3 respectively on one side or on both sides in the circumferential direction is partially entrained by the negative pressure area formed downstream of the baffle plate 4 by the air jets, to form eddy currents 14. The fuel flow 9 forming the eddy currents 14 is mixed with the air flow 10, and also partially gradually mixed with the furnace gas 11 entrained by the air flow 10. And when the combustion gas is entrained by an amount enough to ignite the fuel, the fuel initiates combustion. The eddy currents 14 assure stable ignition of the flames even though the flames are not stabilised at the air inlet openings 3 or the fuel injector outlets 6. If the flow velocity ratio of the combustion air flow to the fuel flow is 0.2 or more when the fuel is injected in a direction perpendicular to the air flow 10 just before it is injected from the openings 3, the flames are formed without being stabilised at the injectors and are low in NOx content as described before.

The baffle plate 4 provided around the fuel pipe 1 at the tip of the fuel pipe 1 within the air pipe 2 and in contact with the inside wall of the air pipe 2 can have relatively large openings 3 through which air for combustion is injected into the furnace or other combustion chamber. Therefore the cross-sectional area of the air/gas stream can be large and thus combustion-product gas can be efficiently entrained. Furthermore, since a plurality of openings 3 are formed, the air flow 10 is injected separately, and the respective jets entrain the exhaust gas 11. So, compared to a burner with one air jet, the exhaust gas around the air flow can be efficiently entrained, to enhance the effect of self-induced exhaust gas recirculation. The internal recirculation area 12 is formed in the portion surrounded by the plurality of combustion air jets, and the external recirculation area 13 is formed around the plurality of combustion air jets. In both the recirculation areas, part of the exhaust gas is recirculated and entrained by the combustion air jets. Especially in the internal recirculation area 12, high temperature exhaust gas is recirculated, and hence the diffusion flames, although not stabilised at any portions, can be ignited and formed stably.

Figures 3, 4 and 9 show a case where a disc 7 is installed additionally. In this case, as shown in the drawings, a self-induced exhaust gas recirculation promoting area 8 is formed downstream of the disc 7, to expand the internal recirculation area 12, thereby considerably increasing the quantity of the exhaust gas recirculated, to give a further higher effect in the decrease of NOx. The disc plate 7 inhibits the expansion of the air flow 10 into the internal recirculation area 12 of high temperature to increase the quantity of self-induced exhaust gas recirculation. The increase of entrained gas flow significantly promotes the effect of decreasing NOx.

In the above combustion, if the combustion air introduced into the air pipe 2 is oxygen-enriched air containing more than 21% by volume of oxygen, the combustion quantity can be increased, while the low NOx combustion is sustained.

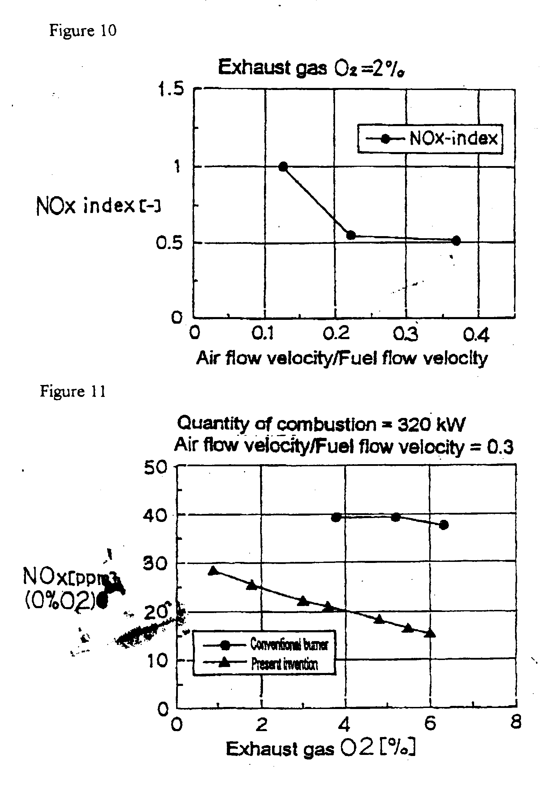

Figure 10 shows the NOx reducing (decrease) effect of the present invention. From the diagram, it can be seen that if the air/fuel flow velocity ratio is 0.2 or more NOx can be remarkably decreased.

Figure 11 shows the NOx reducing (decrease) effect of the present invention. From the diagram, it can be seen that if the air/fuel flow velocity ratio is 0.2 or more, NOx can be remarkably decreased, compared with a conventional example.

## Claims

1. Combustion apparatus for achieving combustion with a low production of nitrogen oxides, which apparatus comprises an air delivery pipe (2) and a fuel pipe (1) located within the air delivery pipe (2), the air delivery pipe (2) being closed at the end by a baffle plate (4) having a plurality of air delivery openings (3) around the fuel pipe (1) at or adjacent the tip of the fuel pipe, a plurality of fuel injectors (5) extending from the fuel pipe and having fuel outlets (6) in the vicinity of the air delivery openings (3) in the baffle plate (4), which fuel outlets (6) are at least circumferentially offset from, and adjacent the radially inner corners of, the air delivery openings (3) and positioned so that in use fuel injected from the outlets of the fuel injectors may be injected in a direction generally perpendicular to the general direction of air flow just before the air flow is delivered through the air delivery openings in the baffle plate.

2. Apparatus according to Claim 1, wherein there are the same number of fuel injectors (5) as there are air delivery openings (3) in the baffle plate (4) and they are all offset from their respective air delivery openings in the same circumferential direction.

3. Apparatus according to Claim 1, wherein there are twice as many fuel injectors (5) as there are air delivery openings (3) in the baffle plate (4), the fuel injectors being arranged in pairs with the fuel injectors of each pair being located adjacent respective opposite radially inner corners of their associated air delivery opening.

4. Apparatus according to any of Claims 1, 2 or 3, wherein there is further provided a disc (7), larger in diameter than the fuel pipe (1) and located on the side of the baffle plate (4) opposite the fuel pipe (1), the disc (7) being substantially parallel to but spaced from the baffle plate (4), so as to be able in use to form a gas recirculation promotion area downstream thereof.

5. Apparatus according to Claim 4, wherein the disc (7) is carried on and closes a part of the end of the fuel pipe (1) which projects through the baffle plate (4).

6. A method of achieving combustion with a low production of nitrogen oxides, which method uses a burner having combustion apparatus according to any preceding claim and in which method fuel injected from the outlets of the fuel injectors is injected in a direction generally perpendicular to the general direction of the air flow just before the air flow is delivered through the air delivery openings to the baffle plate, and the ratio of the air flow velocity at the air delivery openings (3) to the fuel flow velocity at the fuel outlets (16) is 0.2 or more.

7. A method according to Claim 6, characterised in that oxygen enriched air comprising 21% or more by volume of oxygen is delivered along the air delivery pipe (2).

## Patentansprüche

1. Verbrennungsvorrichtung zur Durchführung einer Verbrennung mit niedriger Produktion von Stickoxiden, bestehend aus einem Luftauslaßrohr (2) und einem Brennstoffrohr (1), das im Luftauslaßrohr (2) angeordnet ist, wobei das Luftauslaßrohr (2) am Ende durch eine Drosselplatte (4) verschlossen ist, die mehrere Luftauslaßöffnungen (3) um das Brennstoffrohr (1) am oder nahe am Ende des Brennstoffrohres hat, mehreren Brennstoffinjektoren (5), die sich vom Brennstoffrohr aus erstrecken und Brennstoffauslässe (6) nahe den Luftauslaßöffnungen (3) in der Drosselplatte (4) haben, wobei die Brennstoffauslässe (6) wenigstens in Umfangsrichtung versetzt von und nahe den radialen inneren Ecken der Luftauslaßöffnungen (3) derart angeordnet sind, daß im Betrieb von den Auslässen der Brennstoffinjektoren injizierter Brennstoff in einer Richtung etwa senkrecht zur allgemeinen Richtung des Luftstromes, unmittelbar bevor der Luftstrom durch die Luftauslaßöffnungen in der Drosselplatte abgegeben wird, injiziert werden kann.

2. Vorrichtung nach Anspruch 1, bei der die gleiche Anzahl Brennstoffinjektoren (5) wie Luftauslaßöffnungen (3) in der Drosselplatte (4) vorhanden sind, und sie alle gegenüber ihren jeweiligen Luftauslaßöffnungen in der gleichen Umfangsrichtung versetzt sind.

3. Vorrichtung nach Anspruch 1, bei der zweimal soviel Brennstoffinjektoren (5) wie Luftauslaßöffnungen (3) in der Drosselplatte (4) vorhanden sind, wobei die Brennstoffinjektoren paarweise angeordnet sind, und die Brennstoffinjektoren jedes Paars nahe den jeweiligen gegenüberliegenden radialen inneren Ecken der zugehörigen Luftauslaßöffnung angeordnet sind.

4. Vorrichtung nach Anspruch 1, 2 oder 3, bei der weiterhin eine Scheibe (7) mit einem Durchmesser größer als das Brennstoffrohr (1) vorgesehen ist, die sich auf der Seite der Drosselplatte (4) gegenüber dem Brennstoffrohr (1) befindet und im wesentlichen parallel zur, jedoch beabstandet von der Drosselplatte verläuft, um im Betrieb einen Gasumwälz-Aktivierbereich stromabwärts davon zu bilden.

5. Vorrichtung nach Anspruch 4, bei der die Scheibe (7) am Ende des Brennstoffrohres (1), das durch die Drosselplatte (4) vorsteht, sitzt und einen Teil davon verschließt,

6. Verfahren zur Druchführung einer Verbrennung mit niedriger Produktion von Stickoxyden unter Verwendung eines Brenners mit einer Brennvorrichtung nach einem der vorhergehenden Ansprüche, bei dem von den Auslässen der Brennstoffinjektoren injizierter Brennstoff in einer Richtung etwa senkrecht zur allgemeinen Richtung des Luftstromes, unmittelbar bevor der Luftstrom durch die Luftauslaßöffnungen an die Drosselplatte abgegeben wird, injiziert wird, und das Verhältnis der Luftstromgeschwindigkeit an den Auslaßöffnungen (3) zur Brennstoffstromgeschwindigkeit an den Brennstoffauslässen (16) 0,2 oder mehr beträgt.

7. Verfahren nach Anspruch 6, bei dem mit Sauerstoff angereicherte Luft mit 21% oder mehr Sauerstoffvolumen längs des Luftauslaßrohres (2) abgegeben wird.

## Revendications

1. Appareil de combustion pour obtenir une combustion avec un faible taux de production d'oxydes d'azote, lequel appareil comprend un conduit d'amenée d'air(2) et un conduit de combustible(1) disposé à l'intérieur du conduit d'amenée d'air(2), le conduit d'amenée d'air(2) étant fermé à son extrémité par une plaque déflectrice(4) comportant une pluralité d'ouvertures d'échappement d'air(3) autour du conduit de combustible(1) au niveau de ou adjacentes à l'extrémité du conduit de combustible, une pluralité d'injecteurs de combustible(5) s'étendant depuis le conduit de combustible et comportant des orifices de sortie de combustible(6) à proximité des ouvertures d'échappement d'air(3) dans la plaque déflectrice(4), lesquels orifices de sortie de combustible(6) sont au moins décalés circonférentiellement des angles radialement intérieurs des ouvertures d'échappement d'air, et adjacents à eux, et positionnés de telle façon que en cours d'utilisation le combustible injecté par les orifices de sortie des injecteurs de combustible peut être injecté dans une direction généralement perpendiculaire à la direction générale du flux d'air juste avant que le flux d'air soit délivré à travers les ouvertures d'échappement d'air formés dans la plaque déflectrice.

2. Appareil selon la revendication 1, dans lequel il y a le même nombre d'injecteurs de combustible(5) qu'il y a d'ouvertures d'échappement d'air(3) dans la plaque déflectrice(4) et ils sont tous décalés par rapport aux ouvertures respectives d'échappement d'air dans la même direction circonférentielle.

3. Appareil selon la revendication 1, dans lequel il y a deux fois autant d'injecteurs de combustible(5) qu'il y a d'ouvertures d'échappement d'air(3) dans la plaque déflectrice(4), les injecteurs de combustible étant disposés par paires tandis que les injecteurs de combustible de chaque paire sont situés adjacents aux angles intérieurs respectifs radialement opposés de leur ouverture d'échappement d'air associée.

4. Appareil selon l'une quelconque des revendications 1,2 ou 3, dans lequel il est en outre prévu un disque(7) qui a un diamètre plus grand que celui du conduit de combustible(1) et qui est disposé sur le côté de la plaque déflectrice opposé au conduit de combustible(1), le disque(7) étant essentiellement parallèle mais espacé de la plaque déflectrice(4), de façon à pouvoir en cours d'utilisation former une région de promotion de gaz de recirculation en aval d'elle.

5. Appareil selon la revendication 4, dans lequel le disque(7) est porté par une partie d'extrémité du conduit de combustible(1) et ferme cette partie qui fait saillie à travers la plaque déflectrice(4).

6. Procédé pour obtenir une combustion avec une faible production d'oxydes d'azote, lequel procédé utilise un brûleur comprenant un appareil de combustion conforme à l'une quelconque des revendications précédentes et dans lequel procédé le combustible injecté à partir des orifices de sortie des injecteurs de combustible est injecté dans une direction généralement perpendiculaire à la direction générale du flux d'air juste avant que le flux d'air soit délivré à travers les ouvertures d'échappement d'air vers la plaque déflectrice, et le rapport de la vitesse du flux d'air aux ouvertures d'échappement d'air(3) par rapport à la vitesse du flux de combustible au niveau des orifices de sortie de combustible(16) est égal à 0,2 ou supérieur.

7. Procédé selon la revendication 6, caractérisé en ce que de l'air enrichi d'oxygène comprenant 21 % d'oxygène en volume ou davantage est fourni le long du conduit d'amenée d'air(2).
